Europäisches Patentamt

European Patent Office

Office européen des brevets

(11) Publication number: **0 062 993**
A1

# EUROPEAN PATENT APPLICATION

(21) Application number: **82301622.5**

(22) Date of filing: **26.03.82**

(51) Int. Cl.³: **H 01 J 29/20**
**H 01 J 29/32, C 09 K 11/475**

(30) Priority: **09.04.81 GB 8111207**

(43) Date of publication of application:
**20.10.82 Bulletin 82/42**

(84) Designated Contracting States:
**DE FR NL**

(71) Applicant: **The Secretary of State for Defence in Her Britannic Majesty's Government of The United Kingdom of Great Britain and Northern Ireland Whitehall London SW1A 2HB(GB)**

(72) Inventor: **Cockayne, Brian
39 North End Lane
Malvern Worcestershire(GB)**

(72) Inventor: **Plant, John George
Tyrus House Castlemorton
Malvern Worcestershire(GB)**

(74) Representative: **Edwards, John Brian et al,
Procurement Executive Ministry of Defence Patents 1 A (4), Room 2014 Empress State Building Lillie Road London SW6 1TR(GB)**

(54) Cathode ray tube phosphor layers.

(57) A cathode ray tube (C.R.T.) phosphor is formed by a fibre optic plate (4) comprising single crystal fibres (7) of a phosphor material such as $Y_3Al_5O_{12}$ doped with Tb, Eu, or Ce, held in a matrix (8) e.g. of aluminium, epoxy resin, or a glass. The layer (4) may be mounted inside a cathode ray tube envelope (1) or form its front face. The fibres (7) may be doped with different dopant to give a multi colour display. For example the fibres may be arranged in groups of threes each group having a fibre doped to give emissions of red, blue, and green. One use of the invention in high brightness displays such as aircraft head up displays.

*Fig.2.*

EP 0 062 993 A1

Croydon Printing Company Ltd.

- 1 -

CATHODE RAY TUBE PHOSPHOR LAYERS

This invention relates to cathode ray tube (CRT) phosphor layers.

In a cathode ray tube an image is observed on a phosphor layer where struck by an electron beam. The screen is formed on the inside of the front surface of an evacuated envelope containing one or more electron emitting structures.

Conventionally the phosphor layer is formed as a powder layer e.g. by settlement from a suspension followed by firing. Doping with suitable activators provides the three primary colour emissions or mixtures of these colours. For some applications such as head up displays or projection television (TV) a high brightness is required from the cathode ray tube. This involves increasing the electron current but there is a limit to the current that can be absorbed without damage to the phosphor layer.

In an attempt to use higher electron currents a phosphor layer was formed of single crystal material Unfortunately light trapping within the layer prevented useful emission. Roughening of the surfaces still did not allow adequate emission.

According to this invention a single crystal phosphor layer for a cathode ray tube comprises a fibre optic face plate having a multiplicity of single crystal fibres arranged parallel to one another in a matrix material.

According to an aspect of this invention a cathode ray tube comprises an evacuated envelope containing a phosphor screen material and an electrode structure, characterised in that the phosphor is in the form of a fibre optic plate having fibres of a single crystal material arranged parallel to one another in a matrix material.

The single crystal host material may be doped to give a desired colour emmission. For example the host material may be $Y_3Al_5O_{12}$ doped with $Tb^{3+}$ (green) Eu (red) or Ce (blue). The matrix may be aluminium, an epoxy resin, or a glass.

The fibres may be doped to emit the same colour or doped to give a plurality of colour. For example the fibres may be arranged in groups of threes with a red blue and green emitter in each group.

The invention will now be described by way of example only with reference to the accompanying drawings of which:-

Figures 1 is a schematic side view of a cathode ray tube;

Figure 2 is a cross section through a fibre optic phosphor plate;

Figure 3 is a part front view of the fibre optic phosphor plate shown in Figure 2;

Figure 4 is a schematic view of apparatus for pulling fibres.

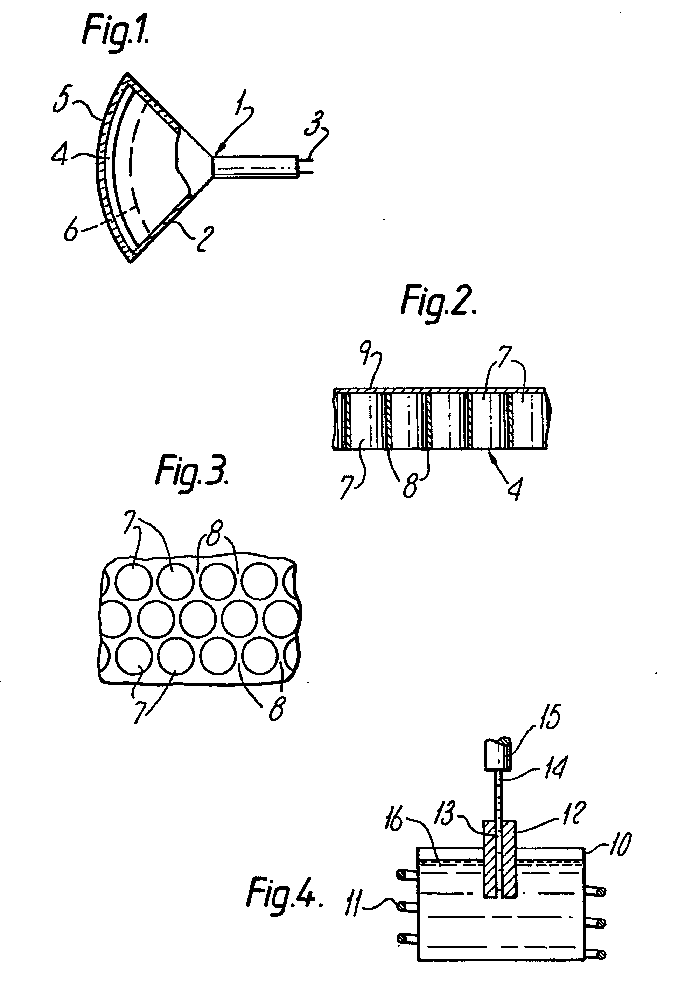

As seen in Figure 1 a cathode ray tube 1 comprises an evacuated envelope 2 having an electrode structure 3 at one end and a fibre optic plate 4 at the other end inside the front face. If the cathode ray tube is part of a colour television receiver a shadow mask 6 is located inside the envelope 2.

The face plate Figure 2 comprises a multiplicity of doped single crystal $Y_3Al_5O_{12}$ fibres 7 held together in aluminium matrix 8. A thin film 9 of aluminium covers the inner face.

When struck by an electron beam a fibre 7 emits at an appropriate colour without scattering light to adjacent fibres because the refractive index of the matrix 8 is lower than that of the fibre 7. Making the fibre 7 small e.g. a hundred microns proves high definition of image on the fibre plate 4.

Single crystal fibres 7 may be pulled as shown in Figure 4 and as described in U.K. Patent Specification No. 1,195,947. Oxides of yttrium, alumina and terbium are milled and placed in a susceptor 10 where the oxides are melted by a heating coil 11. Depending into the melt 16 is a die 12 with a bore 13 of a few hundred microns diameter (e.g. 100 $\mu$m to 200 $\mu$m or more). Capillary forces cause the melt to rise up the bore 13 to meet a seed crystal 14 attached to a holder 15. The melt solidifies on the lower end of the seed 14. As the seed 14 is raised a single crystal fibre 7 is drawn out of the die 12. The fibre 7 is subsequently coated e.g. with aluminium and a group of individual fibres are heated and pressed together to form a bundle. A number of bundles are similarly heated and passed together. This is repeated until a whole face plate size bundle is achieved. Slicing, grinding and polishing then shapes the fibre plate 4 to its required thickness.

The thin coating of aluminium 9 is evaporated onto one face of the fibre plate. The finished plate 4 is attached to the front 5 of the envelope 2 and the remainder of the tube 1 assembled in the conventional manner.

To give a single colour cathode ray tube the fibre plate 4 may be the composition $Y_{2.91}Tb_{0.09}Al_5O_{12}$ giving a green emission.

Alternatively the fibres 7 may be doped with one of three different dopants and the fibres arranged in groups of threes each fibre aligned with an aperture in the shadow mask 6. The resultant cathode ray tube may then be used as in conventional colour television receivers having groups of three different phosphor dots (each dot giving red or blue or green emissions).

Claims:

1. A single crystal phosphor layer for a cathode ray tube characterised by a fibre optic plate having a multiplicity of single crystal phosphor fibres arranged parallel to one another in a matrix material.

2. A cathode ray tube comprising an evacuated envelope containing a phosphor screen material and an electrode structure, characterised in thst the phosphor is in the form of a fibre optic plate having fibres of a single crystal material arranged parallel to one another in a matrix material.

3. The cathode ray tube of claim 2 wherein the fibres are of $Y_3Al_5O_{12}$.

4. The cathode ray tube of claim 3 wherein the dopant is terbium$^{3+}$, or europium, or cerium.

5. The cathode ray tube of claim 2 wherein the matrix material is aluminium, or an epoxy resin, or a glass.

6. The cathode ray tube of claim 2 wherein the fibres have the composition $Y_{2.91} Tb_{0.09} Al_5 O_{12}$.

7. The cathode ray tube of claim 2 wherein the fibres are doped with different dopants to provide a multi-colour display.

8. The cathode ray tube of claim 7 wherein the fibres are arranged in groups of threes each group having a fibre doped to give a red, a blue, and a green emission.

**Fig.1.**

**Fig.2.**

**Fig.3.**

**Fig.4.**

**EUROPEAN SEARCH REPORT**

**0062993**
Application number

EP 82 30 1622

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-2 024 842 (N.V.PHILIPS' GLOEILAMPENFABRIEKEN) *Claims 1,7; page 2, lines 43-53; figure 2* | 1-4 | H 01 J 29/20 H 01 J 29/32 C 09 K 11/475 |
| | --- | | |
| Y | GB-A-2 000 173 (N.V.PHILIPS' GLOEILAMPENFABRIEKEN) *Claims 1,2,5; page 1, lines 44-54* | 1-4 | |
| | --- | | |
| Y | GB-A- 634 722 (PHILIPS LAMPS LTD) *Claim 1; page 1, lines 69-72; page 2, lines 94-104; figure* & NL - A - 61 451 | 1,2,5 | |
| | --- | | |
| Y | DE-A-1 622 864 (FERRANTI LTD) *Claim 1; page 2, last paragraph - page 3, first paragraph;figure* | 1,2 | **TECHNICAL FIELDS SEARCHED (Int. Cl. ³)** |
| | --- | | |
| A | US-A-4 180 477 (R.G.L.BARNES) *Claim 1; column 1, lines 65-68* | 6 | H 01 J C 09 K |
| | ----- | | |

The present search report has been drawn up for all claims

| Place of search | Date of completion of the search | Examiner |
|---|---|---|
| THE HAGUE | 09-07-1982 | DECANNIERE L.J. |